(19) Europäisches Patentamt
European Patent Office
Office européen des brevets

(11) **EP 3 923 027 B1**

(12) **EUROPÄISCHE PATENTSCHRIFT**

(45) Veröffentlichungstag und Bekanntmachung des Hinweises auf die Patenterteilung:
**05.06.2024 Patentblatt 2024/23**

(21) Anmeldenummer: **20179719.8**

(22) Anmeldetag: **12.06.2020**

(51) Internationale Patentklassifikation (IPC):
**G01S 13/931** (2020.01)     **G01S 17/931** (2020.01)
**G01S 15/931** (2020.01)     **G01S 13/08** (2006.01)
**G01S 15/08** (2006.01)      **G01S 17/08** (2006.01)
**G06V 20/58** (2022.01)      **G01S 17/86** (2020.01)
**G01S 7/48** (2006.01)

(52) Gemeinsame Patentklassifikation (CPC):
**G01S 13/08; G01S 7/4808; G01S 17/08;**
**G01S 17/86; G01S 17/931; G06V 20/586;**
G01S 15/08; G01S 2013/9314; G01S 2013/93274;
G01S 2015/935

(54) **VERFAHREN ZUM BESTIMMEN EINES BELEGUNGSSTATUS EINER PARKTASCHE SOWIE ZUM BESTIMMEN DER BELEGUNGSSTATI MEHRERER PARKTASCHEN ENTLANG EINES STRASSENZUGES**

METHOD FOR DETERMINING AN OCCUPANCY STATUS OF A PARKING LOT AND METHOD FOR DETERMINING THE OCCUPANCY STATUS OF A PLURALITY OF PARKING LOTS ALONG A ROAD

PROCÉDÉ DE DÉTERMINATION D'UN ÉTAT D'OCCUPATION D'UNE PLACE DE STATIONNEMENT AINSI QUE DE DÉTERMINATION DE L'ÉTAT D'OCCUPATION D'UNE PLURALITÉ DE PLACES DE STATIONNEMENT LE LONG D'UNE RUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.12.2021 Patentblatt 2021/50**

(73) Patentinhaber: **Parkling GmbH**
**10178 Berlin (DE)**

(72) Erfinder:
• **FRETTER, Christoph**
**12435 Berlin (DE)**
• **HASHIMOTO, Mark**
**10823 Berlin (DE)**
• **HÜLSEBUSCH, Detlev**
**10115 Berlin (DE)**
• **SELIG, Oleg**
**10245 Berlin (DE)**

(74) Vertreter: **Wunderlich & Heim Patentanwälte PartG mbB**
**Irmgardstraße 3**
**81479 München (DE)**

(56) Entgegenhaltungen:
**EP-A1- 2 963 631      US-A1- 2011 022 269**
**US-A1- 2019 130 747**

• **ONO S ET AL: "A probe car for parking-vehicle detection by using laser range sensor", INTELLIGENT VEHICLE SYMPOSIUM, 2002. IEEE JUN 17-21, 2002, PISCATAWAY, NJ, USA,IEEE, Bd. 2, 17. Juni 2002 (2002-06-17), Seiten 322-327, XP010635848, ISBN: 978-0-7803-7346-4**
• **MOHOTTALA S ET AL: "Fusion of a camera and a laser range sensor for vehicle recognition", COMPUTER VISION AND PATTERN RECOGNITION WORKSHOPS, 2009. CVPR WORKSHOPS 2009. IEEE COMPUTER SOCIETY CONFERENCE ON, IEEE, PISCATAWAY, NJ, USA, 20. Juni 2009 (2009-06-20), Seiten 16-23, XP031606891, ISBN: 978-1-4244-3994-2**

**Beschreibung**

Die Erfindung ist im beigefügten Anspruchssatz beschrieben. Die Erfindung betrifft ein Verfahren zum Bestimmen eines Belegungsstatus einer Parktasche, bei dem ein Fahrzeug entlang eines Straßenzugsegmentes mit mindestens einer Parktasche bewegt wird. Hierbei weist das Fahrzeug einen seitlich zum Straßenrand ausgerichteten Abstandssensor sowie einen Sensor zur satellitenbestimmten Orts- und Zeitbestimmung auf. Mittels dieser beiden Sensoren werden zumindest Abstands- und Ortsdaten während der Bewegung des Fahrzeuges entlang des Straßenzugsegmentes aufgezeichnet. Hierbei binden die Abstandsdaten des Abstandssensors den Abstand des Abstandssensors zum nächsten Objekt in Sensorrichtung ab. Mit anderen Worten definieren die Abstandsdaten des Abstandssensors den Abstand zwischen dem Fahrzeug und beispielsweise einem seitlich hierzu geparkten Fahrzeug oder einer Hauswand.

Ferner betrifft die Erfindung ein Verfahren zum Bestimmen von Belegungsstati mehrerer Parktaschen entlang eines Straßenzugsegmentes.

Durch die Zunahme der Bevölkerung in städtischen Gebieten nimmt der Verkehr, insbesondere auch der Individualverkehr mit Pkws, zu. Gerade im innerstädtischen Bereich führt diese massive Zunahme der Verkehrsdichte zu Problemen, die einen Mangel an Platzangebot zur Folge haben, der nicht mehr mit einfachen Mitteln gelöst werden kann. Weitere Probleme sind die damit einhergehende Lärmbelästigung durch den Verkehr aber auch die mittlerweile immer kritischer gesehene Belastung durch Schadstoffe.

Studien haben gezeigt, dass ca. 30% des innerstädtischen Verkehrs kein klassischer Beförderungsverkehr ist, sondern auf Fahrzeuge zurückzuführen ist, die auf Parkplatzsuche sind.

Hochrechnungen auf Deutschland ergeben, dass hierbei 1,9 Milliarden Stunden für die Parkplatzsuche aufgewendet werden. Hierbei werden 3,2 Milliarden Liter Treibstoff verbraucht. Insgesamt geht man von einem volkswirtschaftlichen Verlust in Höhe von 40,4 Milliarden EUR aus.

Der Wunsch nach einem Parkraummanagement, der diesen Verkehr zur Parkplatzsuche reduziert, ist daher in zunehmendem Maße gegeben.

Bei derartigen Systemen wird grundsätzlich von zwei Zuständen der Datenermittlung unterscheiden. Zum einen müssten statische Daten beschafft werden, aus denen hervorgeht, wo Parkplätze sind, zu welchen Zeiten man an diesen Parkplätzen man parken darf, aber auch Informationen, wie die Parkplätze zu beparken sind, beispielsweise als Längsparker oder Querparker. Dies beinhaltet auch Informationen über Parkverbotszonen sowie eventuelle Preise für das Parken. Derartige Daten werden als statische Daten bezeichnet und stellen die Grundvoraussetzung für ein Parkraummanagement dar.

Allerdings reichen diese Daten nicht aus, um ein aktives effizientes Parkraummanagement anzubieten. Hierfür sind noch zusätzlich sogenannte dynamische Daten notwendig. Diese bilden Informationen ab, auf deren Grundlage eine aktuelle Parkplatzbelegungssituation ermittelt werden kann.

Die Ermittlung von derartigen statischen Daten wird beispielsweise in der DE 10 2008 21 415 A1 oder der DE 10 2016 212 505 A1 beschrieben.

In der US 2011/0022269 A1 ist ein Verfahren beschrieben, um mittels Ultraschallsensoren aus einem fahrenden Fahrzeug vorhandene Parkplätze zu ermitteln. Ein ähnliches Verfahren ist auch aus der EP 2 963 631 A1 bekannt.

Ono S. et al: "A probe car for parking-vehicle detection by using laser range sensor", Intelligent Vehicle Symposium, 2002. IEEE Jun 17-21, 2002, Piscataway, NJ, USA, IEEE, XP010635848 und S. Mohottala et al: "Fusion of a camera and a laser range sensor for vehicle recognition", Computer Vision and Pattern Recognition Workshops, 2009. CVPR Workshops 2009. IEEE Computer Society Conference on, 2009-06-20, IEEE, Piscataway, NJ, USA, XP 031 606 891, betreffen weitere Publikationen, die sich mit dem Erkennen von Parkplätzen beschäftigen.

Die Ermittlung von dynamischen Daten oder deren Vorhersage ist beispielsweise aus der DE 10 2018 107 510 B1 oder der WO 2016/200883 A1 bekannt.

Gerade bei der Ermittlung von dynamischen Parkdaten ergeben sich bei den bekannten Verfahren jedoch Probleme, dass diese entweder ungenau sind oder einen hohen Investitionsaufwand erfordern, wenn sie beispielsweise fest verbaute Sensoren für Parkplätze vorsehen.

Der Erfindung liegt daher die **Aufgabe** zugrunde, ein Verfahren zum Bestimmen eines Belegungsstatus einer Parktasche anzugeben, welches effizient durchgeführt werden kann und eine hohe Genauigkeit aufweist.

Diese Aufgabe wird erfindungsgemäß durch ein Verfahren mit den Merkmalen des Anspruchs 1 sowie für mehrere Parktaschen durch ein Verfahren mit den Merkmalen des Anspruchs 15 gelöst.

Vorteilhafte Ausführungsformen der Erfindung sind in den Unteransprüchen, in der Beschreibung sowie in den Figuren und deren Erläuterungen angegeben.

Entsprechend der Erfindung ist vorgesehen, dass statische Parkinformationen zur Lage von Parktaschen in einem Straßenzugsegment und Beparkungsinformationen zu jeder Parktasche vorliegen. Diese können beispielsweise wie in der noch nicht veröffentlichten EP Anmeldung 20 174 906.6 beschrieben ermittelt werden. Ferner werden mittels der Abstands- und Ortsdaten projizierte, entlang der Parktasche, insbesondere auf der Straße, angeordnete Abstandsdaten ermittelt, welche jeweils ein Abstandsdatum des Abstandssensors zum nächsten Objekt in Sensorrichtung an einem Punkt auf dem Straßenzugsegment beziehungsweise der Straße an der Parktasche angeben. Mittels der projizierten Abstandsdaten der Parktasche wird ein Standardabstand ermittelt. Anschließend wird ein Punkt der Parktasche als unbeparkt bestimmt, wenn das Abstandsdatum dieses Punktes größer als der Standardabstand zuzüglich einem Delta ist. Dann kann ein Bereich einer Parktasche als ein oder mehrere freie Parkparkplätze bestimmt werden, wenn der abgerundete Quotient der Länge der benachbarten zusammenhängenden unbeparkten Punkte zur Länge eines durchschnittlichen Parkplatzes 1 oder größer ist.

Der Erfindung liegt die Erkenntnis zugrunde, dass es für eine zuverlässige Bestimmung des Belegungsstatus einer Parktasche nicht ausreichend ist, nur mit einem, beispielsweise an einem Fahrzeug vorgesehenen, Sensor, an der Parktasche vorbeizufahren und mittels der so ermittelten Daten einen Belegungsstatus zu ermitteln.

Im Rahmen der Erfindung wird als eine Parktasche ein Teil einer Straße beziehungsweise einer Parkmöglichkeit angesehen, an der aneinandergereihte Parkplätze vorhanden sind. Dies bedeutet, dass diese Parkplätze ohne Unterbrechung beispielsweise einer Einfahrt oder dergleichen, vorliegen. Im Sinne der Erfindung kann ferner ein Straßenzugsegment als ein Abschnitt einer Straße verstanden werden, der sich beispielsweise zwischen zwei Kreuzungen erstreckt.

Um vorhandene Ungenauigkeit bestehender Verfahren zu verbessern, werden entsprechend des erfindungsgemäßen Verfahrens statische Parkinformationsdaten zur Lage von Parktaschen in dem Straßenzugsegment und Beparkungsinformationen zu jeder Parktasche verwendet. Bei den statischen Parkinformationen handelt es sich grundsätzlich um Daten, die separat mittels anderer Verfahren ermittelt werden müssen. Beispiele für diese Daten sind die exakte Lage einer Parktasche, aber auch Beparkungsinformationen einer Parktasche, beispielsweise ob es sich hierbei um einen Parkbereich handelt, in dem parallel, senkrecht oder diagonal zum Straßenverlauf geparkt werden darf. Ebenso können Informationen von Parkschildern einfließen, die beispielsweise ein Parken nur während des Wochenendes gestatten.

Aus den ermittelten Abstands- und Ortsdaten, der im oder am Fahrzeug vorhandenen Sensoren, welche miteinander synchronisiert sein können, werden nun projizierte Abstandsdaten errechnet, welche entlang einer zu beurteilenden Parktasche angeordnet sind. Diese Abstandsdaten geben für mehrere Punkte auf der Straße parallel zu der Parktasche an, in welchem Abstand das nächste Objekt in Sensorrichtung vorhanden ist. Als Sensorrichtung kann hierbei beispielsweise die Richtung verstanden werden, in der der Sensor ausgerichtet ist. Diese Richtung ist idealerweise orthogonal zum eigentlichen Straßenverlauf. Somit kann der Abstand zum nächsten Objekt in Sichtrichtung des Sensors ermittelt werden. Hierbei kann es sich beispielsweise um ein geparktes Auto handeln, jedoch, wenn kein Auto auf dem Parkplatz steht, auch um die dahinterliegende Hauswand.

Eine weitere Erkenntnis, die der Erfindung zugrunde liegt, ist, dass aus den Abstandsdaten, im Fall der Erfindung, aus den projizierten Abstandsdaten, nur Informationen für jede einzelne Parktasche ermittelt werden können, und nicht allgemein gültige Informationen. Auch wurde entsprechend der Erfindung erkannt, dass es für eine hochgenaue Auswertung notwendig ist, einen Referenzwert, der entsprechend der Erfindung als Standardabstand bezeichnet wird, explizit für jede Parktasche neu zu berechnen und wenn möglich keinen Standardwert für die gesamte Auswertung heranzuziehen. Der Standardabstand kann als der Abstand angesehen werden, den das Fahrzeug beziehungsweise der Sensor zu der straßenzugewandten Seite eines geparkten Fahrzeuges in der Parktasche aufweist. Da auch mehrere Fahrzeuge in einer Parktasche geparkt sein können, variiert dieser Abstand, so dass der erfindungsgemäße Standardabstand einen entsprechenden Mittelwert darstellt.

Anschließend werden die projizierten Abstandsdaten so ausgewertet, dass ein Punkt einer Parktasche als unbeparkt bestimmt wird, wenn das Abstandsdatum dieses Punktes größer als der zuvor ermittelte Standardabstand zuzüglich einem Delta ist. Um nun auf freie oder beparkte Parkplätze zu schließen, wird eine Auswertung durchgeführt, nach der ein Bereich einer Parktasche als ein oder mehrere nebeneinanderliegende freie Parkplätze bestimmt werden, wenn der abgerundete Quotient der Länge der benachbarten zusammenhängenden unbeparkten Punkte zur Länge eines durchschnittlichen Parkplatzes 1 oder größer ist. Die Länge eines durchschnittlichen Parkplatzes kann sich beispielsweise aus den Beparkungsinformationen ergeben. Anders ausgedrückt wird folgende Gleichung berechnet:

$$ n = \left\lfloor \frac{s_f}{s_a} \right\rfloor $$

wobei $s_f$ die Länge der benachbarten zusammenhängenden unbeparkten Punkte, $s_a$ die Länge eines durchschnittlichen Parkplatzes und n die Anzahl der zusammenhängenden Parkplätze ist.

In analoger Weise kann natürlich auch einen Rückschluss gezogen werden, dass ein Parkplatz beparkt ist, indem ein Punkt einer Parktasche als beparkt bestimmt wird, wenn das Abstandsdatum dieses Punktes kleiner als der Standardabstand zuzüglich dem Delta ist. Hierbei kann Delta einen entsprechenden, insbesondere positiven, Korrekturwert darstellen.

Bevorzugt ist es, wenn die projizierten Abstandsdaten äquidistant entlang der Parktasche ermittelt werden. Mit anderen Worten wird dafür gesorgt, dass die projizierten Abstandsdaten über die gesamte Parktasche mit derselben Dichte vorliegen, um eine zuverlässige Beurteilung durchzuführen.

Zum Erzeugen der projizierten Abstandsdaten kann es vorteilhaft sein, wenn Verlaufsdaten des Straßenverlaufes des Straßenzugsegmentes vorliegen und diese zum Erzeugen der projizierten Abstandsdaten verwendet werden. Anders ausgedrückt können die ermittelten Abstandsdaten unter Verwendung der synchronisierten Ortsdaten auf die Daten zum Verlauf des Straßenzugsegmentes projiziert, das heißt abgebildet, werden. So können Kurvenverläufe eines Straßenzugsegmentes ausgeglichen werden, so dass eine hochgenaue Auswertung möglich ist.

Ferner ist es vorgesehen, dass fehlende Abstands- und/oder Ortsdaten für die projizierten Abstandsdaten interpoliert werden können. Ist es beispielsweise vorgesehen, dass entlang einer Parktasche alle 5 cm projizierte Abstandsdaten erzeugt werden, so kann es abhängig von der Frequenz der ermittelten Daten, wie im Folgenden näher erläutert, notwendig sein, projizierten Abstandsdaten durch Interpolation zu erzeugen.

Wird beispielsweise angenommen, dass die maximale Geschwindigkeit eines Fahrzeuges im städtischen Bereich ca. 50 km/h beträgt und die Abtastrate des Abstandssensors 200 Hz ist, so würde ca. alle 7 cm eine Messung durchgeführt werden. Insofern ist eine Interpolation zwischen den gemessenen Werten notwendig. Da jedoch in den seltensten Fällen die Durchschnittsgeschwindigkeit von 50 km/h erreicht wird und der verwendete Abstandssensor auch mit einer deutlich höheren Abtastrate, beispielsweise im Bereich von 500 Hz arbeitet, so stehen mehr als genug hochgenaue Werte für projizierte Abstandsdaten zur Verfügung.

In ähnlicher Weise verhält es sich mit den parallelen und synchron aufgezeichneten Ortsdaten. Wird hier beispielsweise ein GPS-System oder ein System nach dem Galileo-, Glonass- und/oder Beidou-Standard oder eine Kombination derartiger Systeme verwendet, so haben diese oft eine Abtastfrequenz im Bereich von 10 Hz. Dies bedeutet bei einer angenommenen Geschwindigkeit von 50 km/h einen Abtastwert ca. alle 110 cm. Jedoch kann eine lineare Bewegung zwischen diesen beiden Abtastpunkten angenommen werden, so dass die Abstandswerte des Abstandssensors entsprechend hochgenau in projizierte Abstandsdaten umgerechnet werden können. Die Synchronisation zwischen den Ortsdaten und den Abstandsdaten kann beispielsweise über eine entsprechend zeitliche Synchronisation erfolgen, indem ein Zeitstempel in beiden aufgezeichneten Signalen vorhanden ist.

Wie bereits erläutert, ist es wesentlich für die Erfindung, einen Standardabstand für jede Parktasche zu ermitteln. Dies kann auf verschiedene Arten erfolgen. Erfindungsgemäß wird hierzu ein Abstandshistogramm der Werte der projizierten Abstände entlang der Parktasche verwendet. Hierzu werden alle Werte der projizierten Abstandsdaten entlang einer Parktasche in ein Histogramm eingetragen, so dass darauf zu lesen ist, dass beispielsweise 10 Werte mit einem Abstand von 105 cm, 300 Werte mit einem Abstand von 120 cm und 4 Werte mit einem Abstand von 140 cm vorliegen. Um nun den Standardabstand aus diesem Abstandshistogramm zu bestimmen, kann beispielsweise das erste Maximum bestimmt werden und als Standardabstand definiert werden.

Noch genauer wird der Standardabstand, wenn das erste Maximum ausgewählt wird, welches einen Abstandswert von mindestens 1 Meter aufweist.

Dieser Auswahl liegt die Erkenntnis zugrunde, dass zwischen einem vorbeifahrenden Fahrzeug und geparkten Fahrzeugen meist ein Abstand besteht, welcher größer als 1 Meter ist. Insofern handelt es sich bei einem Maximum, welches bei deutlich weniger als 1 Meter liegt, meist um eine Fehlmessungen, die ignoriert werden sollten.

Erfindungsgemäß wird als Standardabstand ein erstes Maximum des Abstandshistogramms verwendet, welches mindestens 10% der Größe des höchsten Maximums beträgt. So wird die Genauigkeit noch weiter verbessert. Auch dieser Spezifikation wiederum liegt die Erkenntnis zugrunde, dass mit dieser Auswahl Messfehler besonders gut herausgefiltert werden können und so der Standardabstand, welcher wesentlich für die Bestimmung des Beparkungszustandes ist, genau ermittelt werden kann.

Eine andere Möglichkeit, die ebenso eine Verbesserung bietet, ist, wenn als Standardabstand das erste Maximum des Abstandshistogramms verwendet wird, welches mindestens 10% der Fläche des Abstandshistogramms aufweist. Auf diese Art und Weise wird erreicht, dass das gewählte Maximum nicht nur ein punktförmiges Maximum ist, sondern ein Maximum, welches groß genug ausgebildet ist, um wesentlich zu sein, das heißt, um berücksichtigt zu werden.

Selbstverständlich können die verschiedenen dargestellten Kriterien zum Bestimmen des Maximums auch in Kombination einzelner oder aller dieser Kriterien verwendet werden.

Da es trotz der oben dargestellten Regel zum Bestimmen des Standardabstands auch zu Situationen kommen kann, in denen dieser nicht zuverlässig beziehungsweise zufriedenstellend bestimmt werden kann, kann in diesem Fall vorgesehen sein, dass der Standardabstand auf 5 Meter gesetzt wird. Es hat sich herausgestellt, dass für den unwahrscheinlichen Fall, dass mittels der projizierten Abstandsdaten kein eindeutiger Standardabstand ermittelt werden kann, die Abschätzung von 5 Meter für den Standardabstand immer noch die Ermittlung der Beparkungsinformationen mit einer hohen Genauigkeit ermittelt wird. Dieser Fall tritt insbesondere dann ein, wenn eine Parktasche überhaupt nicht beparkt ist und somit komplett leer ist.

Zum Bestimmen, ob ein Parkplatz frei ist beziehungsweise wie viele freie Parkplätze in einer Parktasche vorhanden sind, wird die durchschnittliche Länge eines Parkplatzes verwendet. In ähnlicher Weise wird das Delta eingesetzt, um den Standardabstand zu erhöhen. Sowohl die Länge eines durchschnittlichen Parkplatzes als auch das Delta können einzeln oder in Kombination aus den Beparkungsinformationen der jeweiligen Parktasche hervorgehen. Hierbei ist es wesentlich für die durchschnittliche Länge eines Parkplatzes, die Beparkungssituation zu berücksichtigen, das heißt ob auf diesem Parkplatz parallel, orthogonal oder diagonal zur Straße beziehungsweise zum Straßenverlauf, geparkt werden kann. So werden beispielsweise als durchschnittliche Länge eines Parkplatzes bei Parallelbeparkung 5,5 Meter, bei Orthogonalbeparkung 2,5 Meter und bei Diagonalbeparkung 3 Meter angenommen.

In ähnlicher Weise ist es zwingend notwendig, dass das Delta auch entsprechend der Beparkungssituation beziehungsweise der Parkplatzorientierung anzupassen, so dass die ermittelte Information, ob ein Parkplatz frei ist oder nicht, ausreichend genau ist. Hierfür bieten sich beispielsweise Werte von 3 Metern für eine parallele Beparkung, 4 Meter für eine orthogonale Beparkung und 3,5 Meter für eine diagonale Beparkung an. Mit anderen Worten wird durch den Referenzwert, der durch die Addition des Standardabstandes mit dem Delta erzeugt wird, ein fiktiver Abstand ermittelt, der ungefähr in der Mitte eines geparkten Autos liegen würde, so dass eine zuverlässige und relativ fehlerunabhängige Aussage getroffen werden kann, ob ein Parkplatz beparkt ist oder nicht.

Als Abstandssensor können verschiedene Sensoren, Ultraschallsensoren, Radarsensoren, aber auch Lasersensoren, insbesondere LIDAR-Sensoren verwendet werden. Besonders günstig ist hierbei ein 1D LIDAR-Sensor, der ausreichend ist, um den einfachen Abstand zwischen dem Sensor selbst und dem nächsten Objekt, beispielsweise der Stoßstange eines parkenden Autos zu bestimmen.

Vorteilhaft ist es, wenn die Abstands- und Ortsdaten an eine entfernt angeordnete Rechnereinheit weitergeleitet werden, wenn, insbesondere dort, ein Speicher vorgesehen ist, in dem die statischen Parkinformationen vorhanden sind und wenn die Rechnereinheit die Berechnung die projizierten Abstandsdaten, des Standardabstandes sowie das Bestimmen des Beparkungszustandes durchführt. So kann eine zentrale Architektur vorliegen, in der die aktuellen Abstands- und Ortsdaten von einem Fahrzeug mit entsprechenden Sensoren ermittelt werden und an eine Zentrale gesendet werden. In der Zentrale werden aufgrund der Orts- und Abstandsdaten die richtigen statischen Parkplatzinformationen für die jeweilige Parktasche herangezogen und die zuvor beschriebene Auswertung durchgeführt. So liegt an einer zentralen Stelle die Information vor, wie die Beparkungsinformation einer Parktasche ist. Diese Information kann dann an ein Parkleitsystem weitergegeben werden, welches Parkplatzsuchenden Informationen zu dem aktuellen Status von möglichen Parkplätzen in einem Bereich liefert. Hierbei können auch mehrere Fahrzeuge gleichzeitig zum Ermitteln der Abstands- und Ortsdaten mit nur einer Zentrale eingesetzt werden.

Ferner betrifft die Erfindung ein Verfahren zum Bestimmen der Belegungsstatik mehrerer Parktaschen entlang eines Straßenzugsegmentes. Hierbei ist vorgesehen, dass das Verfahren, wie es zuvor beschrieben wurde, für jede Parktasche einzeln und separat durchgeführt wird. Anders ausgedrückt kann sich ein Fahrzeug mit den entsprechend benötigten Sensoren entlang eines Straßenzugssegmentes bewegen und so diese Daten aufzeichnen. Hierbei fährt es jedoch an mehreren Parktaschen vorbei. Bei der anschließenden Auswertung wird das erfindungsgemäße Verfahren für jede Parktasche einzeln ausgeführt und nicht für das gesamte Straßenzugsegment am Stück. Dies ist notwendig, da der Standardabstand essenziell nur für eine entsprechende Parktasche eine zuverlässige Beurteilung zulässt.

Es ist beispielsweise möglich, eine entsprechende Sensoreinrichtung mit einem GPS- und einem LIDAR-Sensor an einem Taxi oder einem Uber-Fahrzeug, welches sich relativ viel in der Stadt bewegt, vorzusehen. Während der Fahrt des Taxis können automatisch die entsprechenden Daten ermittelt werden und an eine Zentrale weitergeleitet werden. In der Zentrale wird das erfindungsgemäße Verfahren durchgeführt und so eine Auswertung ermöglicht, wo freie Parkplätze sind. Diese Information kann dann an Parkplatzsuchende weitergegeben werden. Somit wird der innerstädtische Verkehr reduziert, da ein gezieltes Finden eines Parkplatzes ermöglicht wird.

Die Erfindung wird nachfolgend anhand schematischer Ausführungsbeispiele unter Bezugnahme auf die Figuren näher erläutert. Hierbei zeigen:

Fig. 1    eine schematische Ansicht der Situation beim Ermitteln von Abstands- und Ortsdaten;

Fig. 2    eine schematische Darstellung der ermittelten Abstandsdaten;

Fig. 3    ein Abstandshistogramm der ermittelten Abstandsdaten; und

Fig. 4    eine schematische Darstellung nach Auswertung der Daten.

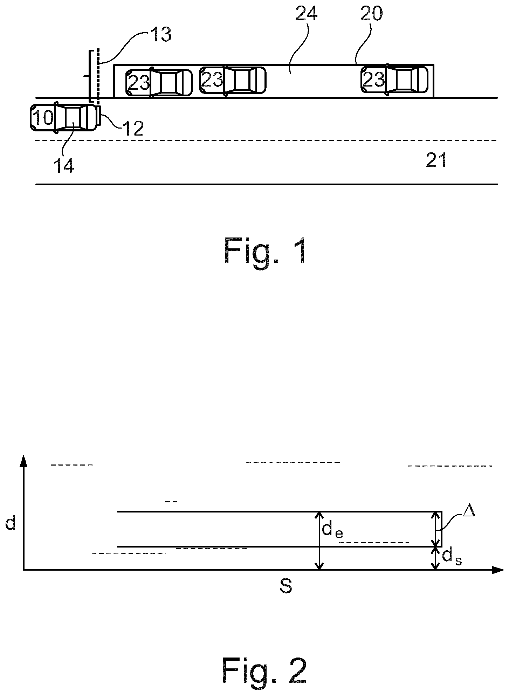

Im Folgenden wird unter Bezugnahme auf die Figuren 1 bis 4 das erfindungsgemäße Verfahren näher erläutert.

Als erster Schritt entsprechend dem erfindungsgemäßen Verfahren fährt ein Fahrzeug 10, welches mit einer Sensoreinrichtung 12, bei der es sich beispielsweise um einen 1-D LIDAR Sensor handeln kann, und einem GPS-Sensor 14 ausgestattet ist, entlang eines Straßenzugsegmentes, in dem mindestens eine Parktasche 20 vorhanden ist. Im Sinne der Erfindung kann unter Parktasche 20 insbesondere ein Bereich verstanden werden, in dem zusammenhängendes Parken möglich ist. Anders ausgedrückt handelt es sich hierbei um einen ununterbrochenen Bereich, in dem Parkplätze 24 liegen. Ein anderer Begriff hierfür wäre auch Parkbucht.

Der LIDAR-Sensor 12 ist mit seiner Sensorrichtung 13 seitlich zum Straßenrand, idealerweise im Wesentlichen orthogonal zur Fahrtrichtung des Fahrzeuges 10 ausgerichtet.

Das Fahrzeug 10 wird auf einer Straße 21 entlang der Parktasche 20 bewegt. Die hier dargestellte Parktasche 20 ist teilweise beparkt. Es befinden sich drei Fahrzeuge 23 in der Parktasche 20 sowie ein freier Parkplatz 24.

Während des Vorbeifahrens des Fahrzeuges 10 an der Parktasche 20 werden mittels dem LIDAR-Sensor 12 und dem GPS-Sensor 24 zum einen Abstandsdaten bezüglich des Abstandes zwischen dem LIDAR-Sensor 12 und dem nächsten Objekt, beispielsweise dem Fahrzeug 23 oder einer dahinterliegenden Hauswand sowie gleichzeitig entsprechende Ortsdaten ermittelt, um die Messung zu verorten. Die Synchronisation kann hierbei beispielsweise über ein gemeinsames Zeitdatum erfolgen.

In Fig. 2 sind die mittels des LIDAR-Sensors 12 ermittelten Abstandsdaten d entlang des Straßensegmentes dargestellt. Hierbei ist zu erkennen, dass unterschiedliche Abstände d zu unterschiedlichen Positionen s vorliegen. Anhand dieser unterschiedlichen Abstände d wird nun mit dem erfindungsgemäßen Verfahren ermittelt, ob ein freier Parkplatz vorhanden ist oder nicht.

Bevor diese Auswertung jedoch durchgeführt werden kann, werden aus den mittels dem LIDAR-Sensor 12 und dem GPS-Sensor 14 ermittelten Daten, projizierte Abstandsdaten erzeugt, die äquidistant, beispielsweise in 5 cm-Schritten entlang der Parktasche 20 verteilt sind. Hierzu ist es teilweise notwendig, entsprechende Daten zu mittelten beziehungsweise auf eine ideale Linie entlang der Parktasche zu projizieren. Hierzu kann es hilfreich sein, wenn Daten über den Straßenverlauf vorliegen. Dieser Schritt ist vorteilhaft, um die Genauigkeit zu erhöhen, aber nicht zwingend notwendig. Schlussendlich liegen Daten in einer Form wie sie in Fig. 2 gezeigt, vor. Um als nächsten Schritt zu ermitteln, ob jeder Punkt beziehungsweise jede Position entlang der Parktasche beparkt oder unbeparkt ist, wird entsprechend der Erfindung zunächst der Standardabstand $d_s$ ermittelt. Hierbei handelt es sich um einen Wert, welcher Informationen zum durchschnittlichen Abstand zwischen dem vorbeifahrenden Fahrzeug 10 und parkenden Fahrzeugen 23 in der Parktasche 20 angibt.

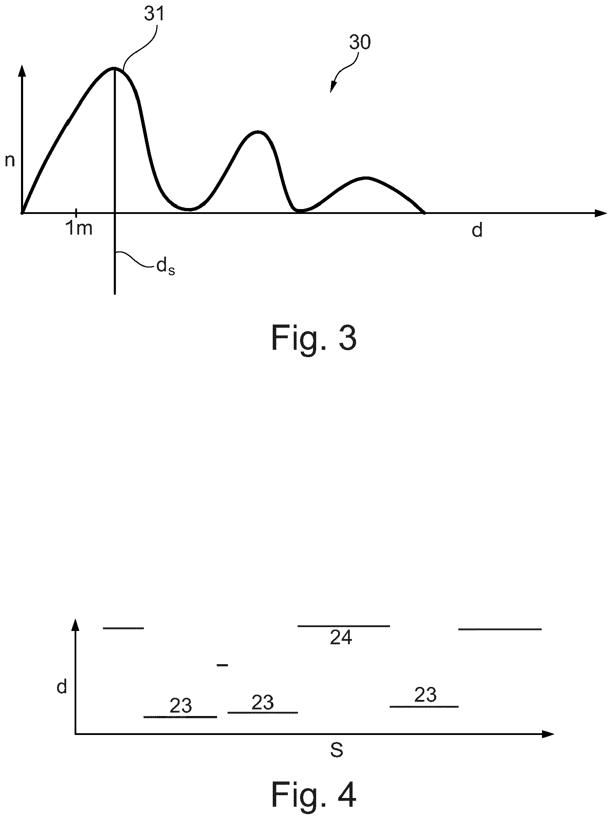

Dies kann auf verschiedene Arten erfolgen. Entsprechend der Erfindung kann es beispielsweise wie im Folgenden unter Bezugnahme auf Fig. 3 erläutert, erfolgen. Fig. 3 stellt ein Abstandshistogramm 30 der projizierten Abstandswerte entlang der Parktasche 20 dar. Die Anzahl der Messungen n mit einem bestimmten Abstand d wird in dem Histogramm 30 gezeigt. Entsprechend der Erfindung wird der Standardabstand $d_s$ auf den Wert des ersten Maximums gesetzt, welches zum Beispiel mindestens 1 Meter Abstand aufweist. Dies wird verfeinert, indem weiter gefordert wird, dass dieses Maximum eine Mindestgröße im Vergleich zu anderen vorhandenen Maxima aufweist oder auch eine Mindestfläche. Die Mindesfläche kann im Sinne der Erfindung beispielsweise dadurch ermittelt werden, dass das Histogramm in einzelne Unterbereiche aufgeteilt wird, die beispielsweise jeweils eine Breite von 20 cm, also von 0 bis 20 cm von 20 bis 40 cm und so weiter aufweisen. Die hierin vorhandene Fläche unter der Kurve des Histogramms 30 muss dann für ein Maximum, welches zum Definieren des Standardabstand $d_s$ herangezogen wird, einen entsprechenden Minimalwert aufweisen, welcher beispielsweise 10% der Gesamtfläche des Abstandshistogramms ist.

Der entsprechend ermittelte Standardabstand $d_s$ ist in Fig. 2 wiederum eingezeichnet. Als nächstes wird entsprechend der Erfindung Delta $\Delta$ ermittelt. Diese hängt von der Parkorientierung innerhalb der Parktasche 20 ab. Mittels des Deltas $\Delta$ wird berücksichtigt, ob die Parktasche beispielsweise parallel, orthogonal oder diagonal zum Straßenverlauf beparkt wird. Die Beparkungsorientierung wird aus vorhandenen statischen Parkinformationen zu der jeweiligen Parktasche ermittelt. Im europäischen Raum können beispielsweise Werte von 3 Meter für eine parallele Parkorientierung, 4 Meter für eine orthogonale Parkorientierung und 3,5 Meter für eine diagonale Parkorientierung verwendet werden. In Nordamerika, wo die meisten Parkplätze deutlich größer sind, werden entsprechend höhere Werte angenommen.

Anschließend wird durch Addition des Standardabstandes $d_s$ und des entsprechenden Deltas $\Delta$ ein Bewertungsabstand $d_e$ ermittelt.

$$d_e = d_s + \Delta$$

Nun wird zu jedem Punkt entlang der Parktasche 20 ein Vergleich ausgeführt, ob der projizierte Abstandswert d größer oder kleiner $d_e$ ist.

Ist der größer als $d_e$, so wird dieser Punkt als unbeparkt bestimmt, ist er jedoch kleiner oder gleich $d_e$, wird er als beparkt ermittelt.

Um anschließend aus diesen Informationen zu ermitteln, ob ein Parkplatz frei ist beziehungsweise eine Parktasche beparkt ist, muss eine zusätzliche Auswertung durchgeführt werden. Diese wird nun mit Bezugnahme auf Fig. 4 näher erläutert.

Um einen freien Parkplatz 24 finden, wird entsprechend der Erfindung die Länge benachbarter, als frei erkannter Punkte ins Verhältnis zu der durchschnittlichen Länge eines Parkplatzes gesetzt und das Ergebnis abgerundet.

Auch die durchschnittliche Länge eines Parkplatzes ergibt sich anhand der statischen Beparkungsinformationen zu einer Parktasche 20, da hier auch berücksichtigt werden muss, in welcher Orientierung in dieser Parktasche geparkt werden darf. Für eine parallele Beparkung wird beispielsweise in Europa eine Länge von 5,5 Metern, für eine orthogonale Beparkung eine Länge von 2,5 Metern und für eine diagonale Beparkung eine Länge von 3 Metern angenommen.

Entsprechend dem Ergebnis dieser Auswertung kann so wie in Fig. 4 verdeutlicht, ermittelt werden, wo ein Fahrzeug 23 innerhalb der Parktasche 20 parkt und welche Plätze innerhalb der Parktasche 20 als freie Parkplätze 24 zu erkennen sind.

Mit dem erfindungsgemäßen Verfahren ist es somit möglich, auf einfache Weise hochgenaue Informationen zum Beparkungszustand von Parkplätzen zu erzeugen.

## Patentansprüche

1. Verfahren zum Bestimmen eines Belegungsstatus einer Parktasche (20),

   wobei ein Fahrzeug (10) entlang eines Straßenzugsegmentes mit mindestens einer Parktasche (20) bewegt wird,
   wobei das Fahrzeug (10) einen seitlich zum Straßenrand ausgerichteten Abstandssensor (12) und einen Sensor (14) zur satellitenbestimmten Orts- und Zeitbestimmung aufweist, mittels derer Abstands- und Ortsdaten während des Bewegens des Fahrzeuges (10) entlang des Straßenzugsegmentes aufgezeichnet werden,
   wobei die Abstandsdaten des Abstandssensor (12) den Abstand vom Abstandssensor (12) zum nächsten Objekt (23) in Sensorrichtung (13) darstellen,
   wobei statische Parkinformationsdaten zur Lage von Parktaschen (20) in dem Straßenzugsement und Beparkungsinformationen zu jeder Parktasche (20) vorliegen,
   wobei mittels der Abstands- und Ortsdaten projizierte entlang der Parktasche (20) angeordnete Abstandsdaten ermittelt werden, welche jeweils ein Abstandsdatum des Abstandssensor (12) zum nächsten Objekt (23) in Sensorrichtung (13) an einem Punkt auf der Straße (21) des Straßenzugsegmentes an der Parktasche (20) angeben,
   wobei mittels der projizierte Abstandsdaten der Parktasche (20) ein Standardabstand $(d_s)$ ermittelt wird,
   dass ein Punkt einer Parktasche (20) als unbeparkt bestimmt wird, wenn das Abstandsdatum dieses Punktes größer als der Standardabstand zuzüglich einem Delta $(\Delta)$ ist,
   wobei ein Bereich einer Parktasche (20) als ein oder mehrere freie Parkplätze (24) bestimmt wird, wenn der abgerundete Quotient der Länge der benachbarten zusammenhängenden unbeparkten Punkte zur Länge eines durchschnittlichen Parkplatzes 1 oder größer ist,
   **dadurch gekennzeichnet, dass** zum Ermitteln des Standardabstandes $(d_s)$ ein Abstandshistogramm (30) der projizierten Abstandsdaten der Parktasche (20) verwendet wird,
   dass als Standardabstand $(d_s)$ ein erstes Maximum (31) des Abstandshistogramm (30) verwendet wird, welches mindestens 10% des höchsten Maximums beträgt.

2. Verfahren nach Anspruch 1, wobei die projizierten Abstandsdaten äquidistant entlang der Parktasche (20) ermittelt werden.

3. Verfahren nach Anspruch 1 oder 2, wobei Verlaufsdaten zum Straßenverlauf des Straßenzugsegmentes vorliegen, welche zum Erzeugen der projizierten Abstandsdaten verwendet werden.

4. Verfahren nach einem der Ansprüche 1 bis 3, wobei fehlende Abstands- und/oder Ortsdaten für die projizierten Abstandsdaten interpoliert werden.

5. Verfahren nach einem der Ansprüche 1 bis 4, wobei als Standardabstand $(d_s)$ 5 Meter gesetzt wird, wenn mittels der projizierten Abstandsdaten kein eindeutiger Standardabstand $(d_s)$ ermittelt werden kann.

6. Verfahren nach einem der Ansprüche 1 bis 5, wobei Länge eines durchschnittlichen Parkplatzes einer Parktasche (20) in dem Beparkungsinformationen vorhanden ist.

7. Verfahren nach einem der Ansprüche 1 bis 6, wobei das Delta $(\Delta)$ durch die Beparkungsinformation der Parktasche bestimmt wird.

8. Verfahren nach einem der Ansprüche 1 bis 7, wobei als Abstandssensor (12) ein LIDAR-Sensor, insbesondere ein 1-D LIDAR-Sensor, verwendet wird.

9. Verfahren nach einem der Ansprüche 1 bis 8,

   wobei Abstands- und Ortsdaten an eine entfernte angeordnete Recheneinheit weitergeleitet werden,
   dass ein Speicher vorgesehen ist, in dem die statischen Parkinformationen vorhanden sind und
   dass von der Recheneinheit die Berechnung, der projizierten Abstandsdaten, des Standardabstand ds sowie das Bestimmen des Beparkungszustandes durchgeführt wird.

10. Verfahren zum Bestimmen der Belegungsstati mehrerer Parktaschen (20) entlang eines Straßenzugsegmentes wobei das Verfahren nach einem der Ansprüche 1 bis 9 für jede Parktasche (20) separat durchgeführt wird.

## Claims

1. Method for determining an occupancy status of a parking bay (20),

    wherein a vehicle (10) is moved along a street segment with at least one parking bay (20), wherein the vehicle (10) has a distance sensor (12) aligned laterally to the curbside and a sensor (14) for satellite-based location and time determination, by means of which distance and location data are recorded during movement of the vehicle (10) along the street segment, wherein the distance data of the distance sensor (12) represent the distance from the distance sensor (12) to the next object (23) in the sensor direction (13),
    **wherein** static parking information data on the position of parking bays (20) in the street segment and parking information on each parking bay (20) are on hand,
    **wherein** by means of the distance and location data projected distance data arranged along the parking bay (20) are ascertained which each indicate a distance datum of the distance sensor (12) to the next object (23) in the sensor direction (13) at a point on the street (21) of the street segment at the parking bay (20),
    **wherein** by means of the projected distance data of the parking bay (20) a standard distance $(d_s)$ is ascertained,
    **wherein** a point of a parking bay (20) is determined as unoccupied if the distance datum of this point is greater than the standard distance plus a delta $(\Delta)$,
    **wherein** an area of a parking bay (20) is determined as one or several vacant parking spaces (24) if the rounded-down quotient of the length of the adjoining contiguous unoccupied points to the length of an average parking space is 1 or greater,
    **characterized**
    **in that** to ascertain the standard distance $(d_s)$ a distance histogram (30) of the projected distance data of the parking bay (20) is used,
    **in that** as standard distance $(d_s)$ a first maximum (31) of the distance histogram (30) is used which amounts to at least 10% of the highest maximum.

2. Method according to claim 1,
    **wherein**
    the projected distance data are ascertained equidistantly along the parking bay (20).

3. Method according to claim 1 or 2,
    **wherein**
    data on the street course of the street segment are on hand which are used to produce the projected distance data.

4. Method according to any one of claims 1 to 3,
    **wherein**
    missing distance and/or location data are interpolated for the projected distance data.

5. Method according to any one of claims 1 to 4,
    **wherein**
    as standard distance $(d_s)$ 5 meters is set if no distinct standard distance $(d_s)$ can be ascertained by means of the projected distance data.

6. Method according to any one of claims 1 to 5,
    **wherein**
    the length of an average parking space of a parking bay (20) is present in the parking information.

7. Method according to any one of claims 1 to 6,
    **characterized in that**
    the delta $(\Delta)$ is determined by way of the parking information of the parking bay.

8. Method according to any one of claims 1 to 7,
    **wherein**
    as distance sensor (12) a LIDAR sensor, in particular a 1-D LIDAR sensor is used.

9. Method according to any one of claims 1 to 8,
    **wherein**

    the distance and location data are forwarded to a remotely arranged computer unit, **wherein** a storage is provided, in which the static parking information is present and
    **wherein** by the computer unit the calculation of the projected distance data, the standard distance $(d_s)$ and the determination of the parking state is carried out.

10. Method for determining the occupancy statuses of several parking bays (20) along a street segment,
    **wherein**
    the method according to any one of claims 1 to 9 is carried out separately for each parking bay (20).

## Revendications

1. Procédé de détermination de l'état d'occupation d'une poche de stationnement (20),

    dans lequel un véhicule (10) est déplacé le long d'un segment de rue comportant au moins une poche de stationnement (20),
    dans lequel le véhicule (10) présente un capteur de distance (12) orienté latéralement par rapport au bord de la rue et un capteur (14) pour la détermination de lieu et de temps par satellite, au moyen desquels les données de distance et de lieu sont enregistrées pendant le déplacement du véhicule (10) le long du segment de rue, dans lequel les données de distance du capteur de distance (12) représentent la distance entre le capteur de distance (12) et l'objet le plus proche (23) dans une direction du capteur (13), dans lequel des données d'informations de stationnement statiques concernant l'emplacement de poches de stationnement (20) dans le segment de rue et des informations de stationnement pour chaque poche de stationnement (20) sont disponibles, dans lequel, au moyen des données de distance et de lieu, sont déterminées des données de distance projetées disposées le long de la poche de stationnement (20), qui indiquent chacune une donnée de distance du capteur de distance (12) par rapport à l'objet le plus proche (23) dans la direction du capteur (13) en un point sur la rue (21) du segment de rue au niveau de la poche de stationnement (20), dans lequel une distance standard (ds) est déterminée au moyen des données de distance projetées de la poche de stationnement (20), dans lequel un point d'une poche de stationnement (20) est déterminé comme étant non stationné si la donnée de distance de ce point est supérieure à la distance standard plus un delta ($\Delta$), dans lequel une zone d'une poche de stationnement (20) est déterminée comme étant une ou plusieurs places de stationnement libres (24) si le quotient arrondi de la longueur des points adjacents contigus non stationnés sur la longueur d'une place de stationnement moyenne est égal ou supérieur à 1, **caractérisé en ce que** pour déterminer la distance standard (ds), on utilise un histogramme des distances (30) des données de distance projetées de la poche de stationnement (20), **en ce que** l'on utilise comme distance standard (ds) un premier maximum (31) de l'histogramme des distances (30), qui représente au moins 10% du maximum le plus élevé.

2. Procédé selon la revendication 1, dans lequel les données de distance projetées sont déterminées de manière équidistante le long de la poche de stationnement (20).

3. Procédé selon la revendication 1 ou 2, dans lequel des données relatives au tracé de rue du segment de rue sont disponibles et sont utilisées pour générer les données de distance projetées.

4. Procédé selon l'une des revendications 1 à 3, dans lequel les données de distance et/ou de lieu manquantes sont interpolées pour les données de distance projetées.

5. Procédé selon l'une des revendications 1 à 4, dans lequel la distance standard (ds) est fixée à 5 mètres si les données de distance projetées ne permettent pas de déterminer une distance standard (ds) explicite.

6. Procédé selon l'une des revendications 1 à 5, dans lequel la longueur d'une place de stationnement moyenne d'une poche de stationnement (20) est disponible dans les informations de stationnement.

7. Procédé selon l'une des revendications 1 à 6, dans lequel le delta ($\Delta$) est déterminé par l'information de stationnement de la poche de stationnement.

8. Procédé selon l'une des revendications 1 à 7, dans lequel un capteur LIDAR, en particulier un capteur LIDAR 1-D, est utilisé comme capteur de distance (12).

9. Procédé selon l'une des revendications 1 à 8, dans lequel

les données de distance et de lieu sont transmises à une unité de calcul située à distance, dans lequel est prévue une mémoire dans laquelle les informations statiques de stationnement sont présentes et l'unité de calcul effectue le calcul des données de distance projetées et celui de la distance standard (ds) et détermine l'état de stationnement.

10. Procédé pour déterminer les statuts d'occupation de plusieurs poches de stationnement (20) le long d'un segment de rue dans lequel le procédé selon l'une des revendications 1 à 9 est mis en oeuvre séparément pour chaque poche de stationnement (20).

## Fig. 1

## Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10200821415 A1
- DE 102016212505 A1
- US 20110022269 A1
- EP 2963631 A1
- DE 102018107510 B1
- WO 2016200883 A1
- EP 20174906 A

**In der Beschreibung aufgeführte Nicht-Patentliteratur**

- A probe car for parking-vehicle detection by using laser range sensor. **ONO S. et al.** Intelligent Vehicle Symposium, 2002. IEEE. IEEE, 17. Juli 2002
- Fusion of a camera and a laser range sensor for vehicle recognition. **S. MOHOTTALA et al.** Computer Vision and Pattern Recognition Workshops, 2009. CVPR Workshops 2009. IEEE Computer Society Conference. IEEE, 20. Juni 2009